# EUROPÄISCHE PATENTSCHRIFT

(11) **EP 4 219 105 B1**
(45) Veröffentlichungstag und Bekanntmachung des Hinweises auf die Patenterteilung: **17.12.2025**
(21) Anmeldenummer: 22154303.6
(22) Anmeldetag: 31.01.2022
(51) Int. Cl.: B27N 1/02, B27N 3/00, B27N 3/04, C08L 97/02, C09J 161/06, C09J 161/24, C09J 161/28

(54) **VERFAHREN ZUM HERSTELLEN EINER FASERPLATTE**
METHOD FOR PRODUCING A FIBREBOARD
PROCÉDÉ DE FABRICATION D'UN PANNEAU DE FIBRES

(43) Veröffentlichungstag der Anmeldung: 02.08.2023
(73) Patentinhaber: SWISS KRONO Tec AG, 6004 Luzern (CH)
(72) Erfinder: BRAUN, Roger, 6130 Willisau LU (CH); HASCH, Joachim, 13114 Berlin (DE); MOISCH, Dorin, 6014 Luzern (CH)
(74) Vertreter: Kalkoff & Partner Patentanwälte mbB

(56) Entgegenhaltungen:
- WO-A1-2018/054732
- DE-C1- 19 603 330
- DE-C1- 19 725 829

## Beschreibung

Die Erfindung betrifft ein Verfahren zum Herstellen einer Faserplatte. Die Erfindung betrifft weiter eine Faserplatte.

Faserplatte, insbesondere wasserfeste Faserplatten, sind z. B. aus der WO 2020/211988 A1 bekannt. Allerdings haben sich diese Faserplatten durch den hohen Bindemittelanteil als sehr teuer erwiesen. Faserplatten allgemein werden in der WO 2018/054732 A1 und in der DE 196 03 330 C1 beschrieben. Die DE 197 25 829 C1 beschreibt eine Oberflächenlackierung.

Die Aufgabe besteht darin, eine wasserfeste Faserplatte bereitzustellen, die preiswerter herstellbar ist.

Die Aufgabe wird gelöst durch ein Verfahren nach Anspruch 1 und eine Faserplatte nach Anspruch 10.

Das erfindungsgemäße Verfahren zum Herstellen einer wasserfesten Faserplatte, aufweisend Fasern und Bindemittel, erfolgt mit den Schritten:
- Bereitstellen von Fasern,
- Bereitstellen des Bindemittels,
- Bereitstellen eines elastifizierenden Zusatzes,
- Auftragen des Bindemittels und des elastifizierenden Zusatzes,
- Formen des Faserkuchens aus den mit Bindemittel und elastifizierendem Mittel versehenen Fasern,
- Verpressen des Faserkuchens in einer Presse unter Aushärten des Bindemittels zum Erzeugen einer Faserplatte, wobei
als Bindemittel 25 Gew.-% bis 35 Gew.-% Melaminharz oder Phenolharz und 10 Gew.-% bis 20 Gew.-% Harnstoffharz sowie 0,1 Gew.-% bis 7 Gew.-% des elastifizierenden Zusatzes, jeweils bezogen auf das Gesamtgewicht der Faserplatte atro, eingesetzt werden.

Es hat sich überraschend herausgestellt, dass das Bindemittel für die wasserfeste Faserplatte durch Harnstoffharz ergänzt werden kann. Harnstoffharz ist hydrolysierbar, insbesondere durch heißes Wasser, und erschien von daher ungeeignet für die Herstellung wasserfester Faserplatten. Insofern war die Eignung von Harnstoffharz für die Herstellung von wasserfesten Faserplatten unerwartet für Fachleute.

Zur Herstellung der erfindungsgemäßen wasserfesten Faserplatte werden zunächst Fasern bereitgestellt. Es können organische oder anorganische Fasern eingesetzt werden. Natürliche Fasern, z. B. lignocellulosische Fasern, Baumwoll- oder Leinenfasern oder synthetische Fasern wie beispielsweise Fasern aus thermoplastischem Material wie Polyethylen oder Polypropylen, aber auch aus Polycarbonat, Polyacrylat, Polymethacrylat oder Polyurethan können zur Herstellung der erfindungsgemäßen Faserplatte eingesetzt werden. Anorganische Fasern wie Carbonfasern oder Fasern aus mineralischem oder keramischem Rohstoff oder Glasfasern sind insbesondere in Mischung mit anderen Fasern geeignet zur Herstellung der wasserfesten Faserplatte. Insbesondere können Mischungen von Fasern, insbesondere Mischungen der vorgenannten Fasern, zur Herstellung des erfindungsgemäßen Werkstoffs eingesetzt werden. Mischungen von Fasern ermöglichen das Einstellen von Eigenschaften des erfindungsgemäßen Werkstoffs, z. B. der Elastizität oder der Biegeeigenschaften, der Formstabilität, der Festigkeit, aber auch der Herstellungseigenschaften bzw. der Verarbeitbarkeit. Werden Fasern aus nachwachsenden Rohstoffen, insbesondere lignocellulosische Fasern, z. B. Fasern aus Holz, Bambus oder Einjahrespflanzen eingesetzt, so stehen preiswerte, einfach zu verarbeitende Fasern zur Verfügung. Natürliche Faser werden bevorzugt unbehandelt eingesetzt, d. h., die Faserkomponenten Cellulose und Lignin sowie ggf. Hemicellulosen sind, nicht in ihren Eigenschaften durch chemische Verfahren verändert. Der Einsatz hygroskopischer Fasern ist nicht ausgeschlossen, insbesondere sofern diese vor dem Herstellen bzw. Verpressen des erfindungsgemäßen Werkstoffs mindestens teilweise getrocknet werden.

Die vorstehend erwähnten lignocellulosischen Fasern umfassen insbesondere sämtliche Fasern, die durch chemische oder physikalische Verfahren aus Pflanzen gewonnen wurden. Typische Beispiele für physikalisch gewonnene Fasern sind Nadelholzfasern, Laubholzfasern oder Bambusfasern, oder Fasern aus anderen organischen Rohstoffen, die durch mechanische Zerfaserung gewonnen wurden. Ein Beispiel für chemisch gewonnene Fasern sind z. B. Zellstofffasern aus Holz, Einjahrespflanzen oder anderen Rohstoffen, insbesondere nachwachsenden Rohstoffen. Besonders typisch werden Holzfasern aus mechanischer Zerfaserung eingesetzt, wobei angestrebt wird, den Verlust an Lignin und Hemicellulosen möglichst zu minimieren. Auch Mischungen von Fasern können eingesetzt werden, insbesondere um Eigenschaften des Werkstoffs (Festigkeitseigenschaften, Gewicht) einzustellen, aber auch um den Rohstoff Faser kostenoptimiert einzusetzen. Fasern im Sinne dieser Erfindung sind auch Faserbündel; eingeschlossen sind auch kleinere Späne, soweit deren Fasern noch weitgehend mit Bindemittel beschichtet werden können.

Soweit im Zusammenhang mit dieser Erfindung Angaben zum Einsatz von Substanzen, typisch Fasern, Bindemittel, elastifizierende oder hydrophobierende Mittel, Härter, Farbe oder andere Additive, insbesondere Angaben in Gew.-% gemacht werden, beziehen sich diese Angaben auf 100% Feststoff. Die tatsächliche Dosierung der Substanzen kann in Lösung, in Mischung oder auf andere Weise mit einem Feststoffgehalt von weniger als 100% erfolgen, in so einem Fall ist der Feststoffgehalt der zugeführten Lösung oder Mischung angegeben bzw. anzugeben. Insbesondere mit Bezug auf Fasern oder faserhaltige bzw. wasserhaltige Produkte wie z. B. Faserplatten wird im Zusammenhang mit der Erfindung der Begriff "atro" verwendet, der sich auf absolut trockene Fasern bzw. faserhaltige Produkte bezieht. Fasern oder faserhaltige Produkte bzw. wasserhaltige Produkte werden als "atro" bezeichnet, wenn sie bei 105 °C bis zur Gewichtskonstanz getrocknet wurden.

Für die Herstellung der wasserfesten Faserplatte wird Bindemittel bereitgestellt. Eingesetzt werden Melaminharz oder Phenolharz einerseits und Harnstoffharz andererseits. Das erfindungsgemäß eingesetzte Bindemittel weist vorzugsweise Melaminharz auf. Melaminharz, typisch Melamin-Formaldehydharz, wird in wässriger Lösung eingesetzt, wobei der Feststoffgehalt des Melaminharzes bevorzugt mindestens 45 Gew.-% bezogen auf die wässrige Lösung beträgt, vorteilhaft beträgt der Feststoffgehalt über 50 Gew.-%. Die Obergrenze des Feststoffgehalts wird durch die Löslichkeit und ggf. Verarbeitbarkeit des Melaminharzes z. B. in Sprühdüsen vorgegeben. Alternativ kann Melaminharz auch als Feststoff, insbesondere in Form von Pulver oder Granulat eingesetzt werden. Melaminharz wird als Bindemittel bevorzugt, weil es sich als nichtquellend und nicht-hygroskopisch sowie als beständig gegen Hydrolyse erweist. Alternativ zu Melaminharz oder in Mischung mit Melaminharz kann Phenolharz eingesetzt werden. Phenolharz ist zwar wasserfest, aber dunkelfarbig, was in der Anwendung nachteilig sein kann.

Melaminharz und/oder Phenolharz werden erfindungsgemäß in Kombination mit Harnstoffharz eingesetzt. In Kombination bedeutet im Zusammenhang mit dieser Erfindung, dass eine Mischung von zwei oder mehr Bindemitteln gleichzeitig auf die Faser aufgebracht wird, z. B. als MF-Harz (Melamin-Formaldehyd-Harz) in Mischung mit Harnstoffharz. Oder es wird eine Kombination von Bindemitteln eingesetzt, die nacheinander eingesetzt werden, z. B. weil sie nicht in Mischung eingesetzt werden können oder weil ein getrenntes Auftragen von verschiedenen Bindemitteln vorteilhafte Wirkung hat. Wie vorstehend beschrieben können auch zwei oder mehr Bindemittel in Kombination eingesetzt werden. Es wird bevorzugt, wenn das Bindemittel überwiegend Melaminharz aufweist.

Erfindungsgemäß beträgt der Anteil von Melaminharz am Bindemittel 25 Gew.-% bis 35 Gew.-% bezogen auf das Gesamtgewicht der Faserplatte (atro), insbesondere 27 Gew.-% bis 33 Gew.-%, vorteilhaft 29 Gew.-% bis 31 Gew.-%. Das Melaminharz kann ganz oder teilweise durch Phenolharz ersetzt werden. Der Anteil an Harnstoffharz beträgt erfindungsgemäß 10 Gew.-% bis 20 Gew.-%, bevorzugt 12 Gew.-% bis 18 Gew.-%, besonders bevorzugt 14 Gew.-% bis 17 Gew.-%, jeweils bezogen auf das Gesamtgewicht der Faserplatte (atro). Der hohe Anteil an Harnstoffharz in einer wasserfesten Faserplatte ist außergewöhnlich. Da Harnstoffharz ein preiswertes Bindemittel ist, trägt der Einsatz von Harnstoffharz dazu bei, die Kosten der erfindungsgemäßen Faserplatte signifikant zu senken.

Die Gesamtmenge an Bindemittel, die zur Herstellung der wasserfesten Faserplatte eingesetzt wird, beträgt bevorzugt bis zu 48 Gew.-%, besonders bevorzugt von bis zu 45 Gew.-%, vorteilhaft bis zu 43 Gew.-%. Die Gesamtmenge an Bindemittel, die zur Herstellung der wasserfesten Faserplatte eingesetzt wird, beträgt mindestens 40 Gew.-%. Auch der gegenüber bekannten wasserfesten Faserplatten reduzierte Gesamteinsatz an Bindemittel trägt dazu bei, die Kosten der Herstellung der wasserfesten Faserplatte zu senken. Es scheint ungewöhnlich, dass eine Verringerung des Einsatzes von Bindemittel bei der Herstellung der wasserfesten Faserplatte möglich ist. Um so überraschender, dass eine nicht-quellende, wasserfeste Faserplatte mit diesem reduzierten Einsatz an Bindemittel herstellbar ist. Setzt man die Gesamtmenge des eingesetzten Bindemittels in Bezug zu den Mengen, in denen Melaminharz und/oder Phenolharz einerseits und Harnstoffharz andererseits eingesetzt werden, so wird deutlich, dass die jeweiligen Mengen von Melaminharz bzw. Phenolharz einerseits und Harnstoffharz andererseits innerhalb eines weiten Bereichs variiert werden können. Dies gibt Flexibilität bei der Herstellung der erfindungsgemäßen Faserplatte und ermöglicht Kosteneinsparungen in einem weiten Bereich.

Vorteilhaft werden Melaminharz bzw. Phenolharz einerseits und Harnstoffharz andererseits in einem Verhältnis von 2,5 : 1 bis 1,5 : 1, bevorzugt 2 : 1 eingesetzt.

Vorteilhaft werden thermoplastische Bindemittel vermieden, insbesondere wird ein Einsatz von thermoplastischen Bindemitteln von mehr als 5 Gew.-% vermieden. Die erfindungsgemäße Faserplatte ist bevorzugt frei von Halogenen (z. B. Fluor, Chlor), aber auch von Terephthalaten.

Der plattenförmige Werkstoff kann nach einer vorteilhaften Ausführung durch den Zusatz eines Elastomers oder Thermoplasten, der als elastifizierender Zusatz eingesetzt wird, z. B. durch Zusatz von Polyvinylacetat (PVAc) oder Ethyl-Vinyl-Acetat in seinen elastischen Eigenschaften modifiziert, insbesondere verbessert werden. Acrylat, Styrolacrylat oder Polyurethan (PU) werden bevorzugt zum Elastifizieren der erfindungsgemäßen wasserfesten Faserplatte eingesetzt, insbesondere in Form eines flüssigen Zusatzes wie z. B. einer Dispersion oder Emulsion, weil sie wasserfest sind. Bevorzugt werden Acrylat, Styrolacrylat und PU mit einer Glasübergangstemperatur von TG kleiner 0 °C eingesetzt. Aber auch Mono- oder Diethylenglykol sind zum Elastifizieren der wasserfesten Faserplatte geeignet. Die vorstehend genannten elastifizierenden Zusätze können jeweils für sich allein, aber auch in Mischung eingesetzt werden. Der Zusatz von Elastomeren oder Thermoplasten reduziert die Sprödigkeit der wasserfesten Faserplatte und verbessert deren elastische Eigenschaften, z. B. den E-Modul. Außerdem bewirkt der Zusatz von elastifizierenden Zusätzen ein besseres Planliegen der erfindungsgemäßen wasserfesten Faserplatte. Der elastifizierende Zusatz wird als Feststoff berechnet anteilig bezogen auf die die Gesamtmenge der wasserfesten Faserplatte (atro) in einer Menge von 1 Gew.-% bis zu 5 Gew.-%, vorteilhaft 2 Gew.-% bis 4 Gew.-% eingesetzt. Die elastifizierenden Zusätze werden beispielsweise dem Bindemittel, z. B. Melaminharz, vor dem Auftragen auf die Fasern zugesetzt und gemeinsam mit dem Bindemittel auf die Fasern aufgetragen. Bevorzugt wird das Mittel zum Elastifizieren vor oder, weiter bevorzugt, nach dem Bindemittel auf die Fasern aufgetragen.

Nach einer vorteilhaften Ausführung der Erfindung wird dem Bindemittel ein Härter zugegeben, der das Aushärten des Bindemittels, in der Regel eine chemische Reaktion wie z. B. eine Additionsreaktion beschleunigt. Durch die Zugabe des Härters wird das Aushärten des Bindemittels in der Presse optimiert. Der Härter wird dabei nicht Bestandteil des Bindemittels, da er als Katalysator lediglich eine chemische Reaktion auslöst, nicht jedoch Bestandteil des entstehenden Polymers wird. Der Härter wird in einer Menge von 0,1 Gew.-% bis 2 Gew.-% bezogen auf die Gesamtmenge der wasserfesten Faserplatte (atro) eingesetzt.

Weiter vorteilhaft erweist sich der Einsatz eines hydrophobierenden Mittels zur Herstellung der wasserfesten Faserplatte gemäß der Erfindung. Verwendet werden können z. B. Paraffin oder Wachs, die typischerweise in Mengen von bis zu 4 Gew.-% bezogen auf das Gewicht des plattenförmigen Werkstoffs eingesetzt werden, meist in Mengen von bis zu 2 Gew.-%, oft in einer Menge von 0,1 Gew.-% bis 1 Gew.-%, jeweils bezogen auf die Gesamtmenge der wasserfesten Faserplatte (atro). Das hydrophobierende Mittel wird typisch in flüssiger Form eingesetzt, z. B. als Emulsion oder Dispersion. Es kann vor oder nach dem Bindemittel oder gemeinsam mit dem Bindemittel eingesetzt werden. Auch der Einsatz eines hydrophobierenden Mittels trägt zu einer Reduzierung der Quellungsneigung des plattenförmigen Werkstoffs bei.

Um in der Verwendung der wasserfesten Faserplatte sicherzustellen, dass die erfindungsgemäße wasserfeste Faserplatte einwandfrei identifiziert werden kann, kann es sich als vorteilhaft erweisen, Farbe zum Einfärben der erfindungsgemäßen Faserplatte einzusetzen. Dazu können z. B. 0,05 Gew.-% bis 2 Gew.-% Farbe bezogen auf die Gesamtmenge der wasserfesten Faserplatte (atro) eingesetzt werden, vorteilhaft 0,1 Gew.-% bis 1 Gew-% Farbe.

Optional weist die wasserfeste Faserplatte Füllstoffe auf. Füllstoffe können als Zuschlagstoff dazu beitragen, das Gewicht des plattenförmigen Werkstoffs zu optimieren, meist zu minimieren oder die Matrixstruktur aus Bindemittel und Fasern weiter zu verbessern. Ein Zuschlagstoff oder eine Kombination aus Zuschlagstoffen können alternativ oder ergänzend dazu dienen, bestimmte Eigenschaften der Platten zu optimieren, z. B. Leitfähigkeit, isolierende Eigenschaften oder Festigkeitseigenschaften. Ein Zuschlagstoff ersetzt in der erfindungsgemäßen Faserplatte Fasern. Da die wasserfeste Faserplatte in Gegenwart von Wasser eine minimale Quellung, insbesondere eine minimierte Dickenquellung aufweisen soll, werden nicht-hygroskopische oder nicht-quellende Zuschlagstoffe sowie Zuschlagstoffe bevorzugt, die beständig gegen Hydrolyse sind. Solche Zuschlagstoffe können mineralische Partikel sein, aber auch keramische, synthetische oder Partikel aus Glas. Weiter können als Zuschlagstoffe Calciumcarbonat (CaCO3) und/oder Schwerspat (BaSO4) eingesetzt werden. Die Größe der Partikel ist bevorzugt nicht größer als ein Millimeter, vorzugsweise zwischen 10 µm und 800 µm. Es können auch Mischungen verschiedener Partikel eingesetzt werden, z. B. Mischungen verschiedener Materialien oder Größe. Es werden bis zu 30 Gew.-% bezogen auf das Gesamtgewicht der wasserfesten Faserplatte (atro) eingesetzt, besonders bevorzugt bis zu 20 Gew.-%, vorteilhaft bis zu 15 Gew.-%. Die untere Grenze der Einsatzmenge ergibt sich durch die Nachweisbarkeit eines Zuschlagstoffs. Der Zuschlagstoff kann vor oder nach dem Auftragen des Bindemittels auf die Fasern aufgebracht werden, bevorzugt durch Sprühen.

Die Pressbedingungen für die wasserfeste Faserplatte sind denen bekannter Holzwerkstoffe im Wesentlichen gleich. Druck und Temperatur sowie Pressdauer liegen z. B. im Bereich üblicher HDF-Platten (Hochdichter Faserplatten). Der erfindungsgemäße Werkstoff lässt sich ausgezeichnet in Pressen herstellen, wie sie für die Herstellung von Holzwerkstoffen eingesetzt werden. Insbesondere sind kontinuierliche oder diskontinuierliche Heißpressen, z. B. kontinuierliche Doppelbandpressen mit umlaufenden, beheizten Metallbändern oder taktweise arbeitenden Pressen. Damit lassen sich Plattenformate herstellen, die -anders als bei WPC- nicht auf die Herstellung schmaler Dielenformate mit einer Breite von ca. 30 cm limitiert sind. Vielmehr können konventionelle Plattenformate bereitgestellt werden, wie sie für Holzwerkstoffplatten üblich sind.

Das Herstellen des Faserkuchens erfolgt, wie bei Holzwerkstoffen üblich, in der Regel durch Streuen. Die mit der gesamten Menge des Bindemittels entweder frisch beleimten oder vorzugsweise getrockneten Fasern werden auf einen Träger, meist auf ein Förderband, gestreut, meist in einer homogenen Schicht, aber alternativ auch in mehreren Schichten, wobei die Schichten eine unterschiedliche Zusammensetzung hinsichtlich Fasern, Bindemittel oder Additiven aufweisen können. Der gestreute Faserkuchen wird auf dem Träger ggf. zuerst durch eine Vorpresse geführt und dann in einer Presse verpresst. Die Presse wirkt dabei auf die Ober- und Unterseite des Faserkuchens bzw. der Faserplatte ein.

Jede Presse, die in ausreichender Weise Druck und Temperatur aufbringt, ist geeignet, sowohl eine Plattenpresse, in der die Faserplatte zwischen zwei Blechen verpresst wird, als auch insbesondere eine kontinuierliche Presse, in der die wasserfeste Faserplatte zwischen zwei umlaufenden Metallbändern gepresst wird. Bevorzugt werden Heißpressen eingesetzt, deren Pressbleche oder umlaufende Metallbänder auf eine vorgegebene Temperatur aufgeheizt sind. Geeignete Presstemperaturen können von 140 °C bis 220 °C, bevorzugt von 160 °C bis 180 °C (Temperatur des Pressblechs) gewählt werden. Je dünner die Platte, desto niedriger kann die Presstemperatur gewählt werden. Geeignete Pressdrücke liegen beispielsweise in einem Bereich von 0,3 N/mm² bis 5,5 N/mm², insbesondere 1 N/mm² bis 3 N/mm². Die Pressdauer beträgt vorteilhaft 6 Sekunden/mm Plattendicke (im Folgenden: s/mm) bis 60 s/mm, meist 10 s/mm bis 20 s/mm. Bei kontinuierlichen Pressen beträgt die Vorschubgeschwindigkeit der umlaufenden Metallbänder, zwischen denen die wasserfeste Faserplatte durch Verpressen hergestellt wird, meist zwischen 350 mm/Sekunde und 400 mm/Sekunde.

Dem eigentlichen Pressvorgang kann eine Vorpresse zum Verdichten des Faserkuchens vorgeschaltet sein. Optional kann der Presse eine Vorrichtung zum Abkühlen der Faserplatte nachgeschaltet sein, insbesondere eine Vorrichtung zum Abkühlen unter einem vorgegebenen Pressdruck, der geringer sein kann als der Pressdruck während des Pressens des Werkstoffs.

Die Offenbarung umfasst auch eine wasserfeste Faserplatte, aufweisend Fasern und Bindemittel, wobei die Faserplatte bis zu 30 Gew.-% Melaminharz oder Phenolharz und bis zu 20 Gew.-% Harnstoffharz, jeweils bezogen auf das Gesamtgewicht der Faserplatte (atro), aufweist. Die Vorteile der Zusammensetzung dieser wasserfesten Faserplatte wurden bereits vorstehend im Zusammenhang mit dem erfindungsgemäßen Verfahren erläutert. Sämtliche vorstehend im Zusammenhang mit dem Verfahren erläuterten Bestandteile der wasserfesten Faserplatte, können Bestandteil der wasserfesten Faserplatte sein, insbesondere in den dort genannten Anteilen.

Die erfindungsgemäße wasserfeste Faserplatte zeichnet sich dadurch aus, dass sie unter Einfluss von Feuchtigkeit, namentlich Wasser, keine signifikante Dickenquellung aufweist. Eine Dickenquellung, die, bezogen auf die ursprüngliche Plattendicke, weniger als 3 %, bevorzugt weniger als 2 % beträgt, wird im Sinne der Erfindung als nichtsignifikant angesehen. Eine auf minimale Dickenquellung optimierte, erfindungsgemäße wasserfeste Faserplatte weist eine Dickenquellung gemäß DIN 317 bzw. eine Kantenquellung gemäß DIN 13329 von nur 0,5% bis 1% auf. Die erfindungsgemäße wasserfeste Faserplatte ist somit quellungsarm oder, bei Erreichen einer maximalen Dickenquellung von bis zu 1 % bezogen auf die ursprünglichen Plattendicke, quellungsfrei und formstabil. Damit kann z. B. auf bekannten Vorrichtungen zur Herstellung von Holzwerkstoffplatten nun ein plattenförmiger, im Wesentlichen nicht-quellender, gegenüber Wasser bzw. Luftfeuchtigkeit formstabiler Werkstoff hergestellt werden, der nicht auf schmale Formate begrenzt ist und der bevorzugt den Einsatz nachwachsender Rohstoffe maximiert.

Die erfindungsgemäße wasserfeste Faserplatte weist gute Festigkeitseigenschaften, insbesondere eine hohe Querzugfestigkeit auf, die mindestens 2,5 N/mm2, bevorzugt bis zu 3 N/mm2, insbesondere bis zu 4 N/mm2 beträgt. Die erfindungsgemäße Faserplatte weist eine hohe Druckfestigkeit auf. Aus den guten Festigkeitseigenschaften resultiert, dass zum Befestigen einer erfindungsgemäßen wasserfesten Faserplatte weniger Befestigungsmittel, z. B. Schrauben, eingesetzt werden müssen, weil das einzelne Befestigungsmittel besseren Halt in der Platte hat. Die höhere Querzugfestigkeit erlaubt zudem eine intensivere Bearbeitung einer erfindungsgemäßen Faserplatte, z. B. das Fräsen komplexer Profile in den Schmalflächen. So kann z.B. in die Schmalfläche einer nur 4,3 mm dicken Platte ein komplexes Profil eingearbeitet werden, das zwei ineinandergreifende Platten sowohl in vertikaler als auch in horizontaler Richtung zueinander ausrichtet. Die hohe Druckfestigkeit ermöglicht eine hohe Punktbelastung der wasserfesten Faserplatte, so dass sie sich z. B. für Ladeböden von Fahrzeugen oder als Boden für Lagerflächen eignet. Die hohe Biegesteifigkeit der wasserfesten Faserplatte lässt eine Verwendung als Konstruktionselement, z. B. Wandaussteifungen zu.

Die Dichte der erfindungsgemäßen wasserfesten Faserplatte beträgt bevorzugt zwischen 1.000 kg/m³ und 1.800 kg/m³, insbesondere zwischen 1.000 kg/m³ und 1.600 kg/m³, vorteilhaft zwischen 1.000 kg/m³ und 1.300 kg/m³, besonders vorteilhaft zwischen 1.000 kg/m³ und 1.200 kg/m³. Die erfindungsgemäße Faserplatte zeigt, bedingt durch den hohen Einsatz an Bindemittel, gegenüber z. B. einem Holzwerkstoff, z. B. einer HDF-Platte, die einen geringeren Anteil an Bindemittel aufweist, ein höheres Gewicht, z. B. zwischen 1.000 kg/m³ und 1.200 kg/m³.

Die erfindungsgemäße Faserplatte weist in der Regel zwei Hauptflächen auf, die im Folgenden auch als Ober- und Unterseite bezeichnet werden. Zwischen Ober- und Unterseite sind die Schmalflächen oder Kanten der Faserplatte angeordnet. Die Dicke der fertigen Faserplatte kann von 0,8 mm bis 500 mm betragen, typischerweise zwischen 1 mm und 80 mm, meist zwischen 3 mm und 30 mm. Eine typische Anwendung kann eine Dicke der wasserfesten Faserplatte von 4 mm bis 10 mm erfordern, insbesondere zwischen 4 mm und 7 mm. Die erfindungsgemäße Faserplatte kann ebene Hauptflächen aufweisen; die Ober- und/oder Unterseite können aber auch geprägt oder gefräst oder in anderer Weise bearbeitet sein, so dass sich, bezogen auf die Fläche des Werkstoffs, eine variable Dicke der Faserplatte ergibt. Die wasserfeste Faserplatte weist bevorzugt eine über die Dicke im Wesentlichen homogene Zusammensetzung auf.

Die Schmalflächen können mit üblichen Werkzeugen bearbeitet werden. Sie können gesägt, geschnitten oder gefräst werden. Die erfindungsgemäße Faserplatte ist in ihrer maximalen Länge und Breite allein durch verfügbare Pressen begrenzt, die zur Herstellung des Werkstoffs eingesetzt werden. Kleinere Abmessungen können durch Zerlegen der fertigen wasserfesten Faserplatte hergestellt werden. Typische Abmessungen der Faserplatte können sein 5600 mm (Länge) x 2070 mm (Breite) nach Herstellung in der Presse, 1380 mm x 195 mm, nach Aufteilen in Boden-, Wand- oder Deckenpaneele oder 3048 mm x 2800 mm. Letzteres Format eignet sich besonders gut zur Verwendung im Bau, weil die Breite der Platte Geschosshöhe aufweist.

Die erfindungsgemäße wasserfeste Faserplatte kann vielseitig eingesetzt werden, insbesondere für konstruktive Zwecke im Innenausbau und im Außenbau. Sie kann z. B. eingesetzt werden als Fußboden-, Decken- und/oder Wandbelag, zur Herstellung von Innenausbauten oder Möbeln, insbesondere auch für den Innenausbau von Fahrzeugen wie z. B. Fahrzeugkabinen oder Bodenplatten, aber auch im Außenbereich, sowohl als Fassadenplatte bzw. Verkleidung, z. B. als vorgehängte Fassade, als Außenfensterbank oder Dacheindeckung. Die wasserfeste Faserplatte nach der Erfindung eignet sich als Wand-, Decken- und/oder Bodenbelag in Feucht- bzw. Nassräumen. Die wasserfeste Faserplatte nach der Erfindung kann beschichtet, gefärbt, lackiert oder in anderer Weise dekorativ gestaltet werden. Insbesondere Oberflächenbeschichtungen, wie sie z. B. aus dem Bereich der Holzwerkstoffe bekannt sind, können auf die Oberfläche des erfindungsgemäßen Werkstoffs aufgebracht werden. Des Weiteren kann der erfindungsgemäße plattenförmige Werkstoff als ein Bestandteil einer Sandwichplatte eingesetzt werden, d. h, dass der erfindungsgemäße Werkstoff mit gleichen oder anderen folien- oder plattenförmigen Werkstoffen, insbesondere Holzwerkstoffplatten, aber auch Kunststoffplatten oder -folien zu einer Sandwichplatte verbunden werden. Eine Beschichtung kann die Quell- und Schwindeigenschaften der wasserfesten Faserplatte weiter verbessern.

Details der Erfindung werden an Hand eines Ausführungsbeispiels erläutert.

Zur Herstellung einer Faserplatte von 8 mm Dicke, alternativ von einer Dicke zwischen 0,8 mm und 500 mm, werden durch mechanische oder chemisch-mechanische Verfahren hergestellte lignocellulosische Fasern, alternativ synthetische Fasern aus Kunststoff, anorganische Fasern oder chemisch hergestellte Fasern aus lignocellulosischem Material bereitgestellt. Es können auch Mischungen von verschiedenen Fasern eingesetzt werden. Im vorliegenden Ausführungsbeispiel werden 50 Gew.-% Fasern bereitgestellt.

Weiter wird Bindemittel bereitgestellt, vorliegend wie in Tab. 1 angegeben. Es werden 29 Gew.-% Melaminharz und 16 Gew.-% Harnstoffharz eingesetzt, jeweils bezogen auf das Gesamtgewicht der wasserfesten Faserplatte. Anteilig werden Melaminharz, das ganz oder anteilig durch Phenolharz ersetzt werden kann, und Harnstoffharz in einem Verhältnis von 1,9 : 1 bezogen auf das eingesetzte Gewicht der jeweiligen Komponenten eingesetzt. Das Melaminharz wird als Lösung mit einem Feststoffgehalt von 50% aufgebracht; das Harnstoffharz wird ebenfalls als Lösung mit einem Feststoffgehalt von 60 % aufgebracht. Die beiden Komponenten des Bindemittels werden zeitgleich auf die Fasern aufgesprüht.

Ein elastifizierendes Mittel, hier Styrolacrylat, wird als Lösung in einem Anteil von 2,5 Gew-% auf die Fasern aufgesprüht. Das elastifizierende Mittel bewirkt, dass die wasserfeste Faserplatte eine reduzierte Sprödigkeit aufweist. Dadurch bleibt die wasserfeste Faserplatte eben und es wird ein sprödes Bruchverhalten vermieden.

Der Bindemitteleinsatz ist auf 45 Gew.-% reduziert, selbst unter Berücksichtigung des elastifizierenden Mittels beträgt der Anteil an Bindemittel weniger als 50 Gew.-%; hier namentlich 47,5 Gew.-%.

Weiter können optionale Komponenten zugesetzt werden, so wie die in Tabelle 1 aufgeführten Komponenten, die nachfolgend erläutert werden. Es wird in der Regel ein Härter für das Bindemittel auf die Fasern aufgesprüht, hier Ammoniumsulfat in einem Anteil von 0,9 Gew.-%. Die nicht-quellenden Eigenschaften der wasserfesten Faserplatte werden unterstützt durch die Zugabe von 1,5 Gew.-% Wachs oder Öl, das hier als Emulsion eingesetzt wird. Schließlich wird die wasserfeste Faserplatte durch den Einsatz von 0,1 Gew.-% Farbe optisch kenntlich gemacht, so dass sie in der Verwendung nicht mit anderen Faserplatten, die nicht-wasserfest sind, verwechselt werden kann.

Im vorliegenden Ausführungsbeispiel können die vorstehend beschriebenen Komponenten gleichzeitig oder nacheinander auf die Fasern aufgebracht werden, wobei das Aufbringen nacheinander bevorzugt wird, weil sich die Dosierung der Komponenten besser steuern lässt. Gemäß Ausführungsbeispiel werden die Fasern anschließend, nach dem Aufbringen der Komponenten, auf einen Feuchtegehalt von ca. 8% getrocknet. Alternativ können die Komponenten, insbesondere die optionalen Komponenten, auch auf bereits getrocknete Fasern aufgebracht werden. Nach einer weiteren Alternative können z. B. Härter, Farbe und hydrophobierendes Mittel auch nach dem Trocknen, aber vor dem Streuen zu einem Faserkuchen auf die bereits getrockneten und mit Bindemittel und elastifizierendem Mittel versehenen Fasern aufgebracht werden.

**Tabelle 1 Zusammensetzung der wasserfesten Faserplatte (Angaben jeweils 100% Feststoff bzw. atro, jeweils bezogen auf atro wasserfeste Faserplatte)**

| **Komponente** | **Gewicht absolut (kg/m³)** | **Anteil (Gew-%)** |
|---|---|---|
| wasserfeste Faserplatte | 1.113 | 100 |
| Fasern | 556 | 50 |
| Melaminharz | 325 | 29 |
| Harnstoffharz | 175 | 16 |
| Ammoniumsulfat | 10 | 0,9 |
| Styrolacrylat | 28 | 2,5 |
| Emulsion | 17 | 1,5 |
| Farbe | 2 | 0,1 |

Die mit allen Komponenten versehenen Fasern werden zu einem Faserkuchen gestreut. Der Faserkuchen wird in einer bekannten, kontinuierlich arbeitenden Doppelbandpresse bei 180 °C und einem Druck von 2,5 N/mm² bei 15 s/mm Pressdauer zu einer wasserfesten Faserplatte verpresst. Die so erzeugte wasserfeste Faserplatte weist eine Dicke von 8 mm und eine Dichte von 1113 kg/m³ (atro) auf, vgl. Tabelle 1. Die fertige wasserfeste Faserplatte weist meist einen Feuchtegehalt von ca. 6% auf, so dass das Gewicht der Faserplatte in gebrauchsfertigem Zustand ca. 1.180 kg/m³ aufweist.

Die so hergestellte wasserfeste Faserplatte wird gemäß DIN 317 auf Quellung und gemäß DIN 13329 auf Kantenquellung geprüft. Die Dickenquellung wird an einer Kante des Werkstoffs als Veränderung in mm bezogen auf die Ausgangs-Dicke von 8 mm absolut und auch als relative Änderung (%) bestimmt.

Die Dickenquellung für die nach dem vorstehenden Ausführungsbeispiel hergestellte wasserfeste Faserplatte beträgt weniger als 2% bezogen auf die Dicke der Faserplatte. Sie ist damit gegenüber der Dickenquellen einer nicht-wasserfesten Faserplatte, die bei über 20% liegt, um mehr als 90% reduziert. Die Kantenquellung der wasserfesten Faserplatte nach dem Ausführungsbeispiel beträgt weniger als 1,5%, während die Kantenquellung einer bekannten, nicht-wasserfesten Faserplatte bei mehr als ca. 15% liegt. Auch hier ist die Kantenquellung also um ca. 90% reduziert. Dieses Ergebnis ist umso erstaunlicher, als die wasserfeste Faserplatte nach der Erfindung Harnstoffharz aufweist. Bei der wasserfesten Faserplatte nach dem Ausführungsbeispiel sind es 16 Gew.-% bzw. ca. ein Drittel des eingesetzten Bindemittels insgesamt. Trotz dieses hohen Anteils an Harnstoffharz, das der Hydrolyse zugänglich ist, sind die Kantenquellung und die Dickenquellung um ca. 90% und mehr reduziert, wodurch eine wasserfeste Faserplatte bereitgestellt wird, die durch den Einsatz von preiswerterem Bindemittel kostengünstiger herstellbar ist als bekannte, wasserfeste Faserplatten. Zudem ergibt sich ein signifikanter Kostenvorteil dadurch, dass der Bindemittelanteil auf 45% reduziert wurde. Selbst unter Berücksichtigung des elastifizierenden Mittels ergibt sich ein Bindemitteleinsatz von unter 50 Gew.-%, hier von 47,5 Gew.-%.

Trotz dieser geänderten Zusammensetzung weist die wasserfeste Faserplatte gegenüber der aus der WO 2020/211988 A1 bekannten wasserfesten Faserplatte auch vergleichbare Festigkeitseigenschaften auf. Damit kann die erfindungsgemäße wasserfeste Faserplatte in gleicher Weise eingesetzt werden wie die bekannte wasserfeste Faserplatte.

Die erfindungsgemäße Faserplatte lässt sich gut beschichten, wobei die Beschichtung meist die Dickenquellung und ggf. auch die Kantenquellung weiter reduziert.

## Patentansprüche

1. Verfahren zum Herstellen einer wasserfesten Faserplatte, aufweisend lignocellulosische Fasern und Bindemittel, mit den Schritten:
- Bereitstellen von Fasern,
- Bereitstellen des Bindemittels,
- Bereitstellen eines elastifizierenden Zusatzes,
- Auftragen des Bindemittels und des elastifizierenden Zusatzes,
- Formen des Faserkuchens aus den mit Bindemittel und elastifizierendem Mittel versehenen Fasern,
- Verpressen des Faserkuchens in einer Presse unter Aushärten des Bindemittels zum Erzeugen einer Faserplatte, wobei
als Bindemittel 25 Gew.-% bis 35 Gew.-% Melaminharz oder Phenolharz und 10 Gew.-% bis 20 Gew.-% Harnstoffharz sowie 0,1 Gew.-% bis 7 Gew.-% des elastifizierenden Zusatzes, jeweils bezogen auf das Gesamtgewicht der Faserplatte atro, eingesetzt werden.

2. Verfahren nach Anspruch 1, **dadurch gekennzeichnet, dass** 27 Gew.-% bis 33 Gew.-%, insbesondere 29 Gew.-% bis 31 Gew.-% Melaminharz oder Phenolharz, jeweils bezogen auf das Gesamtgewicht der Faserplatte atro, eingesetzt werden.

3. Verfahren nach Anspruch 1 oder 2, **dadurch gekennzeichnet, dass** 12 Gew.-% bis 18 Gew.-% Harnstoffharz, bevorzugt 14 Gew.-% bis 17 Gew.-% Harnstoffharz, jeweils bezogen auf das Gesamtgewicht der Faserplatte atro, eingesetzt werden.

4. Verfahren nach einem der vorstehenden Ansprüche, **dadurch gekennzeichnet, dass** der Einsatz von Bindemittel bis zu 48 Gew.-%, bevorzugt bis zu 45 Gew.-%, vorteilhaft bis zu 43 Gew.-%, jeweils bezogen auf das Gesamtgewicht der Faserplatte atro nicht übersteigt.

5. Verfahren nach einem der vorstehenden Ansprüche, **dadurch gekennzeichnet, dass** das Bindemittel Melaminharz oder Phenolharz und Harnstoffharz in einem Verhältnis von 1,5 : 1 bis 2,5 : 1, bevorzugt 2 : 1 eingesetzt.

6. Verfahren nach einem der vorstehenden Ansprüche, **dadurch gekennzeichnet, dass** 1 Gew.-% bis 5 Gew.-% des elastifizierenden Zusatzes, vorteilhaft 2 Gew.-% bis 4 Gew.-% des elastifizierenden Zusatzes, jeweils bezogen auf das Gesamtgewicht der Faserplatte atro, eingesetzt werden.

7. Verfahren nach einem der vorstehenden Ansprüche, **dadurch gekennzeichnet, dass** 0,1 Gew.-% bis 4 Gew.-% eines hydrophobierenden Mittels bezogen auf das Gesamtgewicht der Faserplatte atro eingesetzt werden, vorteilhaft 1 Gew.-% bis 2 Gew.-%.

8. Verfahren nach einem der vorstehenden Ansprüche, **dadurch gekennzeichnet, dass** 0,1 Gew.-% bis zu 2 Gew.-% eines Härters für das Bindemittel eingesetzt werden, insbesondere 0,5 Gew.-& bis zu 1,5 Gew.-%, jeweils bezogen auf das Gesamtgewicht der Faserplatte atro.

9. Verfahren nach einem der vorstehenden Ansprüche, **dadurch gekennzeichnet, dass** 0,05 Gew.-% bis 2 Gew.-% Farbe, vorteilhaft 0,1 Gew.-% bis 1 Gew.-% Farbe, jeweils bezogen auf das Gesamtgewicht der Faserplatte atro, eingesetzt werden.

10. Wasserfeste Faserplatte, aufweisend Fasern und Bindemittel, wobei die Faserplatte 25 Gew.-% bis 35 Gew.-% Melaminharz oder Phenolharz und 10 Gew.-% bis 20 Gew.-% Harnstoffharz, jeweils bezogen auf das Gesamtgewicht der Faserplatte atro, aufweist.

11. Faserplatte nach Anspruch 10, **dadurch gekennzeichnet, dass** die Faserplatte, bezogen auf das Gesamtgewicht der Faserplatte atro, maximal 48 Gew.-% Bindemittel, vorzugsweise maximal 45 Gew.-%, vorteilhaft maximal 43 Gew.-% Bindemittel aufweist.

12. Faserplatte nach Anspruch 10 oder 11, **dadurch gekennzeichnet, dass** das Bindemittel Melaminharz oder Phenolharz und Harnstoffharz in einem Verhältnis von 2,5 : 1 bis 1, 5 : 1, vorteilhaft von 2 : 1 aufweist.

13. Faserplatte nach einem der Ansprüche 10 bis 12, **dadurch gekennzeichnet, dass** die Faserplatte bis zu 4 Gew.-% Hydrophobierungsmittel, bis zu 2 Gew.-% Farbstoff und/oder bis zu 2 Gew.-% Härter, jeweils bezogen auf das Gesamtgewicht der Faserplatte atro, aufweist.

14. Faserplatte nach einem der Ansprüche 10 bis 13, **dadurch gekennzeichnet, dass** die Faserplatte eine Beschichtung aufweist.

15. Verwendung der wasserfesten Faserplatte nach Anspruch 11 bis 14, **dadurch gekennzeichnet, dass** die Faserplatte für konstruktive Zwecke im Innenausbau und im Außenbau, insbesondere für Fassadenplatten, Außenfensterbänke und Dacheindeckungen eingesetzt wird.

## Claims

1. Method for manufacturing a water-resistant fiberboard comprising lignocellulosic fibers and binder, comprising the steps of
- providing fibers,
- providing the binder,
- providing an elasticizing additive,
- applying the binder and the elasticizing additive,
- forming the fiber cake from the fibers provided with binder and elasticizing agent,
- pressing the fiber cake in a press while curing the binder to manufacture a fiberboard, wherein
from 25% to 35 wt.% of melamine resin or phenolic resin and from 10% to 20 wt.% of urea resin as binders and from 0.1% to 7 wt.% of the elasticizing additive, in each case based on the total weight of the fiberboard atro, are used.

2. Method according to claim 1, **characterized in that** 27 wt.% to 33 wt.%, in particular 29 wt.% to 31 wt.% of melamine resin or phenolic resin, in each case based on the total weight of the fiberboard atro, are used.

3. Method according to claim 1 or 2, **characterized in that** 12 wt.% to 18 wt.% of urea resin, preferably 14 wt.% to 17 wt.% of urea resin, in each case based on the total weight of the fiberboard atro, are used.

4. Method according to one of the preceding claims, **characterized in that** the use of binder does not exceed up to 48 wt.%, preferably up to 45 wt.%, advantageously up to 43 wt.%, in each case based on the total weight of the fiberboard atro.

5. Method according to one of the preceding claims, **characterized in that** the binder melamine resin or phenolic resin and urea resin are used in a ratio of 1.5 : 1, to 2,5 : 1, advantageously 2 : 1.

6. Method according to one of the preceding claims, **characterized in that** 1 wt.% to 5 wt.% of the elasticizing additive, advantageously 2 wt.% to 4 wt.% of the elasticizing additive, in each case based on the total weight of the fiberboard atro, are used.

7. Method according to one of the preceding claims, **characterized in that** 0.1 wt.% to 4 wt.% of a hydrophobizing agent is used, based on the total weight of the fiberboard atro, advantageously 1 wt.% to 2 wt.%.

8. Method according to one of the preceding claims, **characterized in that** 0.1 wt.% up to 2 wt.% of a hardener is used for the binder, in particular 0.5 wt.%& up to 1.5 wt.%, in each case based on the total weight of the fiberboard atro.

9. Method according to one of the preceding claims, **characterized in that** 0.05 wt.% to 2 wt.% of color, advantageously 0.1 wt.% to 1 wt.% of color, in each case based on the total weight of the fiberboard atro, is used.

10. A water-resistant fiberboard comprising fibers and binder, wherein the fiberboard comprises 25 wt.% to 35 wt.% of melamine resin or phenolic resin and 10 wt.% to 20 wt.% of urea resin, in each case based on the total weight of the fiberboard atro.

11. Fiberboard according to claim 10, **characterized in that** the fiberboard has, based on the total weight of the fiberboard atro, at most 48 wt.% of binder, preferably at most 45 wt.%, advantageously at most 43 wt.% of binder.

12. Fiberboard according to claim 10 or 11, **characterized in that** the binder comprises melamine resin or phenolic resin and urea resin in a ratio of 2.5:1 to 1.5:1, preferably 2 : 1.

13. Fiberboard according to any one of claims 10 to 12, **characterized in that** the fiberboard comprises up to 4 wt.% of hydrophobing agent, up to 2 wt.% of colorant and/or up to 2 wt.% of hardener, in each case based on the total weight of the fiberboard atro.

14. Fiberboard according to any one of claims 10 to 13, **characterized in that** the fiberboard has a coating.

15. Use of the water-resistant fiberboard according to claims 10 to 14, **characterized in that** the fiberboard is used for structural purposes in interior and exterior construction, in particular for facade boards, exterior window sills and roof coverings.

## Revendications

1. Procédé de fabrication d'un panneau de fibres résistant à l'eau comprenant des fibres lignocellulosiques et un liant, comprenant les étapes suivantes
- fournir les fibres,
- fournir le liant,
- fournir un additif d'élasticité,
- appliquer le liant et l'additif d'élasticité,
- former le gâteau de fibres à partir des fibres pourvues du liant et de l'agent d'élasticité,
- presser le gâteau de fibres dans une presse tout en durcissant le liant pour fabriquer un panneau de fibres, dans lequel
de 25 à 35 % en poids de résine de mélamine ou de résine phénolique et de 10 à 20 % en poids de résine d'urée en tant que liants et de 0,1 à 7 % en poids de l'additif élastifiant, dans chaque cas par rapport au poids total du panneau de fibres atro, sont utilisés.

2. Procédé selon la revendication 1, **caractérisé par** l'utilisation de 27 % en poids à 33 % en poids, en particulier 29 % en poids à 31 % en poids de résine de mélamine ou de résine phénolique, dans chaque cas sur la base du poids total de panneau de fibres atro.

3. Procédé selon la revendication 1 ou 2, **caractérisé par** l'utilisation de 12 % en poids à 18 % en poids de résine d'urée, de préférence de 14 % en poids à 17 % en poids de résine d'urée, dans chaque cas par rapport au poids total de panneau de fibres atro.

4. Procédé selon l'une des revendications précédentes, **caractérisé par le fait que** l'utilisation de liant ne dépasse pas 48 % en poids, de préférence 45 % en poids, avantageusement 43 % en poids, dans chaque cas sur la base du poids total de panneau de fibres atro.

5. Procédé selon l'une des revendications précédentes, **caractérisé par le fait que** le liant résine de mélamine ou résine phénolique et la résine d'urée sont utilisés dans un rapport de 1,5 : 1, à 2,5 : 1, avantageusement 2 : 1.

6. Procédé selon l'une des revendications précédentes, **caractérisé par** l'utilisation de 1 % en poids à 5 % en poids de l'additif d'élasticité, avantageusement de 2 % en poids à 4 % en poids de l'additif d'élasticité, dans chaque cas par rapport au poids total de panneau de fibres atro.

7. Procédé selon l'une des revendications précédentes, **caractérisé par** l'utilisation de 0,1 % en poids à 4 % en poids d'un agent hydrophobe par rapport au poids total de panneau de fibres atro, avantageusement de 1 % en poids à 2 % en poids.

8. Procédé selon l'une des revendications précédentes, **caractérisé par** l'utilisation de 0,1 % en poids à 2 % en poids d'un durcisseur pour le liant, en particulier 0,5 % en poids& jusqu'à 1,5 % en poids, dans chaque cas sur la base du poids total de panneau de fibres atro.

9. Procédé selon l'une des revendications précédentes, **caractérisé par** l'utilisation de 0,05 % en poids à 2 % en poids de couleur, avantageusement de 0,1 % en poids à 1 % en poids de couleur, dans chaque cas sur la base du poids total du panneau de fibres atro.

10. Panneau de fibres résistant à l'eau comprenant des fibres et un liant, dans lequel le panneau de fibres comprend 25 % en poids à 35 % en poids de résine de mélamine ou de résine phénolique et 10 % en poids à 20 % en poids de résine d'urée, dans chaque cas sur la base du poids total du panneau de fibres atro.

11. Panneau de fibres selon la revendication 10, **caractérisé par le fait que** le panneau de fibres contient, sur la base du poids total du panneau de fibres atro, au maximum 48 % en poids de liant, de préférence au maximum 45 % en poids, avantageusement au maximum 43 % en poids de liant.

12. Panneau de fibres selon la revendication 10 ou 11, **caractérisé par le fait que** le liant comprend de la résine de mélamine ou de la résine phénolique et de la résine d'urée dans un rapport de 2,5:1 à 1,5:1, de préférence 2 : 1.

13. Panneau de fibres selon l'une des revendications 10 à 12, **caractérisé par le fait que** le panneau de fibres comprend jusqu'à 4 % en poids d'agent hydrophobe, jusqu'à 2 % en poids de colorant et/ou jusqu'à 2 % en poids de durcisseur, dans chaque cas par rapport au poids total du panneau de fibres atro.

14. Panneau de fibres selon l'une des revendications 10 à 13, **caractérisé par le fait que** le panneau de fibres est recouvert d'un revêtement.

15. Utilisation du panneau de fibres résistant à l'eau selon les revendications 10 à 14, **caractérisée par le fait que** le panneau de fibres est utilisé à des fins structurelles dans la construction intérieure et extérieure, en particulier pour les panneaux de façade, les appuis de fenêtre extérieurs et les couvertures de toit.
